# EUROPÄISCHE PATENTSCHRIFT

(11) **EP 0 521 901 B1**
(45) Veröffentlichungstag und Bekanntmachung des Hinweises auf die Patenterteilung: **07.09.1994**
(21) Anmeldenummer: 91905773.7
(22) Anmeldetag: 15.03.1991
(51) Int. Cl.: H02J 9/06

(54) **EINRICHTUNG ZUR UNTERBRECHUNGSFREIEN STROMVERSORGUNG**
DEVICE FOR SUPPLYING UNINTERRUPTED POWER
DISPOSITIF D'ALIMENTATION ININTERROMPUE EN COURANT ELECTRIQUE

(30) Priorität: 27.03.1990 DE 4008913
(43) Veröffentlichungstag der Anmeldung: 13.01.1993
(73) Patentinhaber: AKDOGAN, Özkan, D-07356 Lobenstein (DE)
(72) Erfinder: AKDOGAN, Özkan, D-07356 Lobenstein (DE)
(74) Vertreter: Patentanwälte Zellentin & Partner
(86) Internationale Anmeldenummer: EP9100501
(87) Internationale Veröffentlichungsnummer: WO9115048

(56) Entgegenhaltungen:
- FR-A- 2 543 357
- GB-A- 2 120 474
- GB-A- 2 137 033
- GB-A- 2 182 510
- INTELEC 87, 14 Juni 1987, STOCKHOLM, Seiten 512-524; F. BARZEGER et al.: "A novel uninterruptible power supply"
- PESC' 88 RECORD, vol. 2, 11 April 1988, KYOTO, Seiten 6580 - 663; Y. YAMATO et al.: "New conversion system for UPS using high frequency link"
- EPE' 89, vol. 1, 9 Oktober 1989, AACHEN, Seiten 341 - 346; H. YONEMORI et al.: "Instantaneous voltage control-based sinusoidal CVCK inverter with high-frequency resonant AC link and its UPS system application"

## Beschreibung

### Technisches Gebiet

Die Erfindung betrifft eine Einrichtung zur unterbrechungsfreien Stromversorgung mit einem ersten Wandler zur Umwandlung einer zugeführten Wechselspannung in eine pulsbreitenmodulierte Spannung und mit einem zweiten Wandler zur Umwandlung einer aus einer Batterie entnehmbaren Gleichspannung in eine pulsbreitenmodulierte Spannung, wobei Ausgänge der Wandler an je eine Primärwicklung eines Transformators angeschlossen sind, dessen Sekundärwicklung eine Ausgangswechselspannung führt, und wobei den ersten und den zweiten Wandler ansteuernde zueinander synchrone Impulse einer gemeinsamen Impulsquelle entnehmbar sind.

### Stand der Technik

Es sind Einrichtungen zur unterbrechungsfreien Stromversorgung bekanntgeworden, bei welchen eine Batterie gleichzeitig über einen Gleichrichter an ein Wechselspannungsnetz und an den Eingang eines Wechselrichters angeschlossen ist. Während des Betriebs dieser Einrichtungen werden über den Gleichrichter sowohl dem Wechselrichter der erforderliche Strom als auch der Batterie eine Erhaltungsladung zugeführt. Sinkt die Netzspannung unter einen vorgegebenen Wert, wird der für die Wechselrichtung erforderliche Strom der Batterie entnommen. Die Ausgangsspannung des Wechselrichters erfährt somit keine Unterbrechung.

Derartige Einrichtungen haben jedoch den Nachteil, daß der Ladestrom der Batterie sehr stark von der Höhe der Netzwechselspannung und von dem jeweils entnommenen Strom abhängt. Bei anderen bekannten Einrichtungen zur unterbrechungsfreien Stromversorgung erfolgt die Ladung der Batterie getrennt von der Spannungswandlung für den normalen Netzbetrieb. Soll aus der Batterie Strom im Falle eines Ausfalls der Netzwechselspannung entnommen werden, so ist eine Umschaltung zwischen der Wandlung der Netzspannung in die Ausgangswechselspannung und einer Wandlung der Batteriespannung in die Ausgangswechselspannung erforderlich, die meist nicht völlig unterbrechungsfrei ist.

Es ist ferner eine Bereitschaftsstromversorgungseinrichtung bekannt (GB-A-2120474), bei der zwei Wechselrichter vorgesehen sind, von denen einer eine aus der Netzspannung abgeleitete Gleichspannung und der andere eine Batteriespannung in eine Wechselspannung umwandelt, die über einen Transformator wiederum in Gleichspannungen umgewandelt werden. Steuerimpulse für die Wechselrichter werden einer gemeinsamen Quelle entnommen und über Treibertransformatoren den als Wechselrichter dienenden Gegentaktendstufen zugeführt. Durch die Dioden im Ausgangskreis der Wechselrichter wird bewirkt, daß der Wechselrichter mit der jeweils höheren Ausgangsspannung Strom abgibt, während der Wechselrichter mit der niedrigeren Ausgangsspannung freiläuft. Die ausgangsseitige Anordnung von Dioden bedeutet einerseits einen relativ großen Aufwand. Andererseits setzt der Übergang von einem zum anderen Wechselrichter eine Veränderung der Ausgangsspannung voraus, die bei unterbrechungsfreien Stromversorgungseinrichtungen an sich verhindert werden soll.

### Darstellung der Erfindung

Aufgabe der vorliegenden Erfindung ist es, eine Einrichtung zur unterbrechungsfreien Stromversorgung nach dem Oberbegriff des Anspruchs 1 unter Vermeidung der eingangs beschriebenen Nachteile anzugeben. Dabei soll ferner der Wirkungsgrad möglichst hoch sein.

Die genannte Aufgabe wird durch die kennzeichnenden Merkmale des Anspruchs 1 gelöst.

Die erfindungsgemäße Einrichtung zeichnet sich dadurch aus, daß praktisch keine Störung beim Umschalten zwischen einer Entnahme von Energie aus dem Netz und der Batterie auftritt. Ferner zeichnet sich die erfindungsgemäße Einrichtung durch einen hohen Wirkungsgrad aus. Außerdem sind bei der erfindungsgemäßen Einrichtung die Ausgangsspannung und deren Frequenz unabhängig von Schwankungen der Eingangsspannung und -frequenz. Bei der erfindungsgemäßen Einrichtung wird keine teure und schwere Speicherdrossel benötigt.

Hierdurch ist eine besonders einfache Ausführung der erfindungsgemäßen Einrichtung möglich, ohne daß es zu einer Störung beim Umschalten kommt.

Gemäß einer anderen Weiterbildung ist vorgesehen, daß die von dem ersten und von dem zweiten Wandler erzeugten pulsbreitenmodulierten Spannungen aus Impulsen bestehen, deren Frequenz einem Vielfachen der Frequenz der Ausgangswechselspannung entspricht und deren Breite entsprechend der Frequenz und der Kurvenform der Ausgangswechselspannung moduliert ist und daß die Impulse bezüglich ihrer Polarität der jeweils gebildeten Halbwelle der Ausgangswechselspannung entsprechen. Hierdurch wird eine Ummagnetisierung des Transformatorkerns lediglich mit der niedrigeren Frequenz der Ausgangswechselspannung und nicht mit der hohen Frequenz der pulsbreitenmodulierten Impulse durchgeführt. Dieses ermöglicht die Verwendung eines Eisenkerns unter Beibehaltung eines hohen Wirkungsgrades.

Eine derartige Form der pulsbreitenmodulierten Spannungen wird gemäß einer vorteilhaften Ausgestaltung der Erfindung dadurch erzeugt, daß der erste und der zweite Wandler aus elektronischen Schaltern bestehende Gegentaktschaltungen enthalten, wobei jeweils abwechselnd einer der Schalter mit pulsbreitenmodulierten Impulsen und der andere Schalter mit Impulsen angesteuert wird, deren Dauer und zeitliche Lage einer Halbwelle der Ausgangswechselspannung entsprechen.

Maßnahmen gemäß dieser Weiterbildung können auch bei anderen Einrichtungen als solchen zur unterbrechungsfreien Stromversorgung in vorteilhafter Weise angewendet werden.
Sie eignen sich beispielsweise für Schaltnetzteile und für Zwecke der Motorsteuerung einschließlich der Versorgung von Dreiphasenmotoren.

Bei dieser Ausgestaltung kann die Gegentaktschaltung aus zwei zueinander gegenläufig angesteuerten Brückenzweigen bestehen oder es können für mindestens einen der Wandler zwei Gegentaktschaltungen vorgesehen sein, die mit je einer Teilwicklung der Primärwicklung verbunden sind.

Eine einfache Möglichkeit zur Ladung der Batterie besteht gemäß einer anderen vorteilhaften Ausgestaltung der Erfindung darin, daß der Transformator eine weitere Sekundärwicklung aufweist, die mit einem Ladegleichrichter für die Batterie verbunden ist.

Eine vorteilhafte Erzeugung der für die Ansteuerung der Wandler erforderlichen Impulse erfolgt vorzugsweise durch eine Steuerschaltung, welcher ein die Höhe der Eingangswechselspannung kennzeichnendes Signal, ein die Höhe der Ausgangswechselspannung kennzeichnendes Signal, eine Wechselspannung mit der Frequenz der Ausgangswechselspannung und ein zu modulierendes Signal, dessen Frequenz einem Vielfachen der Frequenz der Ausgangswechselspannung entspricht, zuführbar sind und daß die Steuerschaltung pulsbreitenmodulierte Impulse und den Halbwellen der Ausgangswechselspannung entsprechende Impulse erzeugt und ferner die Ansteuerung des zweiten Wandlers einschaltet, wenn die Eingangswechselspannung außerhalb eines zulässigen Amplitudenbereichs gerät.

Vorzugsweise wird hierbei die Ausgangswechselspannung der Steuerschaltung zugeführt, so daß nach deren Gleichrichtung eine Betriebsspannung für die Steuerschaltung und außerdem ein Istwert der Amplitude zur Regelung zur Verfügung stehen.

### Kurze Beschreibung der Zeichnung

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Einrichtung,
- Fig. 2: ein gegenüber Fig. 1 detaillierteres Schaltbild,
- Fig. 3: bis Fig. 5 Darstellungen von Einzelheiten der Schaltung gemäß Fig. 2 zur näheren Erläuterung der Funktionsweise der Einrichtung nach Fig. 2.

Gleiche Teile sind in den Figuren mit gleichen Bezugszeichen versehen.

**Wege zur Ausführung der Erfindung**

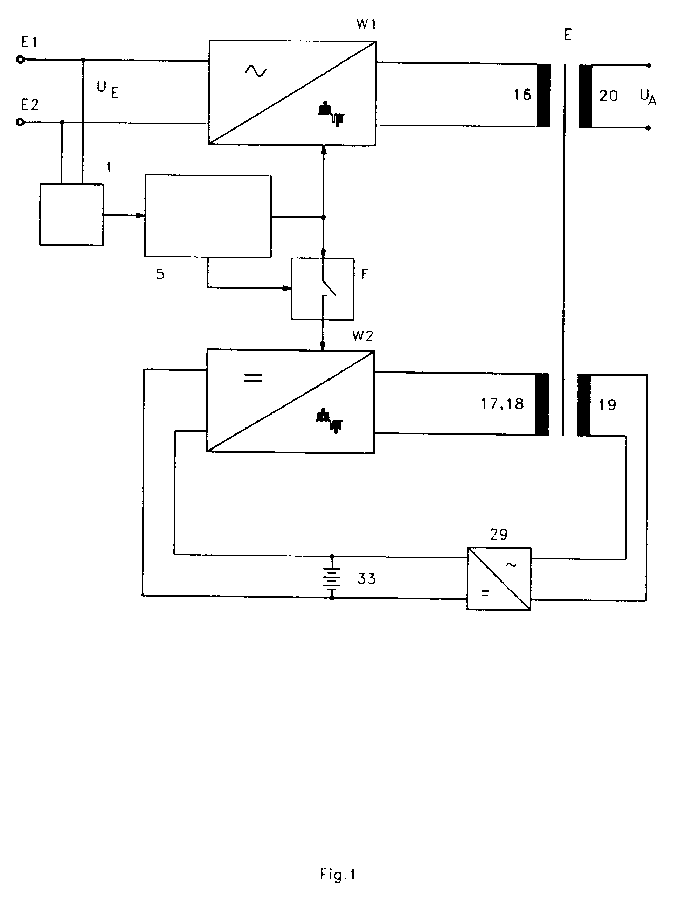

Bei der Einrichtung nach Fig. 1 sind ein erster Wandler W1 und ein zweiter Wandler W2 vorgesehen. Der erste Wandler W1 erhält über Eingangsanschlüsse E1, E2 die Eingangswechselspannung U_{E}. Die pulsbreitenmodulierte Ausgangsspannung des Wandlers W1 besteht aus Impulsen, deren Frequenz wesentlich höher als die Frequenz der Ausgangswechselspannung ist. Bei einem praktisch ausgeführten Ausführungsbeispiel hat sich eine Frequenz von 20 kHz bei einer Frequenz der Ausgangswechselspannung von 50 Hz bewährt. Die Pulsbreite ist derart moduliert, daß eine Sinusform mit guter Näherung nachgebildet wird. Dabei enthält die Ausgangsspannung des Wandlers W1 während einer positiven Halbwelle positive Impulse und während einer negativen Halbwelle negative Impulse. Damit werden sich mit einer hohen Frequenz wiederholende Ummagnetisierungen im Transformator E vermieden. Dadurch wird die Verwendung eines preiswerten Eisenkerntransformators möglich.

Ein zweiter Wandler W2 wandelt die Spannung einer Batterie 33 ebenfalls in eine pulsbreitenmodulierte Spannung um, die einer zweiten Primärwicklung 17, 18 zugeführt wird. Einer Sekundärwicklung 20 kann die Ausgangswechselspannung UA entnommen werden.

Eine zweite Sekundärwicklung 19 dient zusammen mit einem Ladegleichrichter 29 zum Laden der Batterie 33. Eine Steuerschaltung 5 erzeugt Impulse zur Ansteuerung der Wandler W1 und W2. Außerdem erhält die Steuerschaltung 5 von einem Sensor ein Signal, das den Ausfall oder eine unzulässige Abweichung der bei E1, E2 zugeführten Eingangswechselspannung kennzeichnet. Die von der Steuerschaltung 5 erzeugten Impulse werden dem Wandler W1 direkt und dem Wandler W2 über eine Schaltvorrichtung F zugeführt, die ebenfalls von der Steuerschaltung 5 steuerbar ist.

Solange die Eingangswechselspannung innerhalb eines zulässigen Bereichs ist, ist die Schaltvorrichtung F für die Impulse nichtleitend. Es wird daher nur der Wandler W1 angesteuert, so daß die Eingangswechselspannung über den Wandler W1 und den Transformator E mit den Wicklungen 16 und 20 in die Ausgangswechselspannung A umgewandelt wird. Wegen der geringen Zahl der aufeinander folgenden Umwandlungen in verschiedene Spannungsarten ist dabei ein sehr guter Wirkungsgrad erreichbar.

Gerät die Eingangswechselspannung außerhalb eines zulässigen Bereichs oder fällt ganz aus, wird die Schaltvorrichtung F in den leitenden Zustand gesteuert. Damit wird der Wandler W2 völlig synchron zum Wandler W1 in Betrieb genommen und führt Energie aus der Batterie der Primärwicklung 17, 18 des Transformators E zu. Da kein Einschwingvorgang erforderlich ist, erfolgt keine Unterbrechung bei der Umschaltung der Stromversorgung. Vom Beginn eines Ausfalls der Eingangswechselspannung U_{E} bis zum Schalten der Schaltvorrichtung F vergehen etwa 100 µs, während ein im Wandler W1 enthaltener Ladekondensator bei Vollast noch etwa 10 ms Energie für den Wandler W1 liefert.

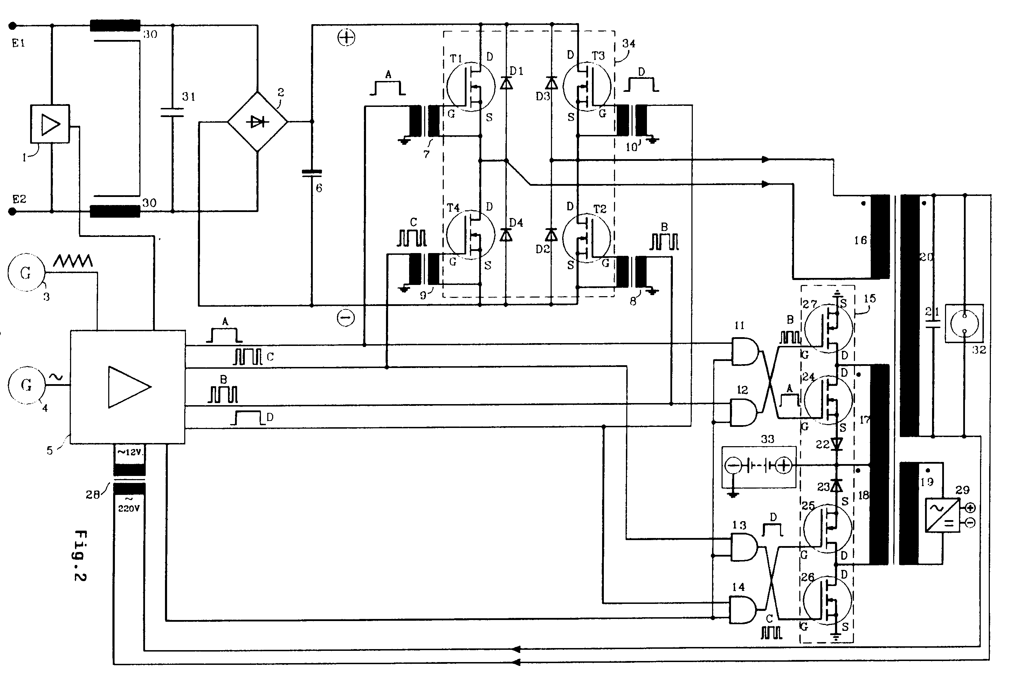

Weitere Einzelheiten des Ausführungsbeispiels werden im Zusammenhang mit Fig. 2 erläutert. Dabei wird der Wandler W1 im wesentlichen aus einem Netzgleichrichter 2 und einer Brückenschaltung 34 gebildet. Den Eingangsanschlüssen E1, E2 ist in an sich bekannter Weise ein Netzfilter 30, 31 nachgeschaltet. An den Netzgleichrichter 2 schließt sich ein Ladekondensator 6 an. Die damit erzeugte Gleichspannung wird mit Hilfe der Brückenschaltung 34 in die bereits beschriebene pulsbreitenmodulierte Spannung umgewandelt.

Die Brückenschaltung 34 besteht aus vier Transistoren T1 bis T4, denen jeweils eine Freilaufdiode D1 bis D4 parallel geschaltet ist. Zur Ansteuerung der Transistoren T1 bis T4 dienen Übertrager 7 bis 10, deren Primärwicklungen Steuersignale A, B, C und D von der Steuerschaltung 5 zugeführt werden.

An die Steuerschaltung 5 ist ein Generator 4 angeschlossen, der mit der für die Ausgangswechselspannung vorgesehenen Frequenz eine sinusförmige Wechselspannung erzeugt. Außerdem liefert ein weiterer Generator 3 eine dreieckförmige Spannung mit einer Frequenz von 20 kHz, die in an sich bekannter Weise zur Erzeugung von pulsbreitenmodulierten Impulsen dient. Diese werden als Steuersignale B und C der Brückenschaltung 34 sowie der Gegentaktschaltungen 15 des zweiten Wandlers W2 zugeführt. Außerdem erzeugt die Steuerschaltung Rechteckimpulse A und D, deren zeitliche Lage den Halbwellen der sinusförmigen Wechselspannung entspricht. Auch diese werden der Brückenschaltung 34 und der Gegentaktschaltung 15 zugeleitet.

Der zweite Wandler wird im wesentlichen von zwei Gegentaktschaltungen 15 gebildet, die jeweils aus zwei in Reihe geschalteten Transistoren 24 bis 27 bestehen, mit denen jeweils eine Diode 22, 23 in Reihe geschaltet ist. Die Drain-Elektroden zweier zu einer Gegentaktschaltung gehörender Transistoren sind jeweils mit einer Teilwicklung 17, 18 der zweiten Primärwicklung des Transformators E verbunden.

Von der Steuerschaltung 5 werden die Steuersignale A bis D den Steuerelektroden G der Transistoren 24 bis 27 über Und-Schaltungen 11, 12, 13, 14 zugeführt. Jeweils einem weiteren Eingang der Und-Schaltungen 11 bis 14 wird ein Schaltsignal von der Steuerschaltung 5 zugeleitet. Damit kann die Ansteuerung der Gegentaktschaltung 15 bzw. des zweiten Wandlers ein- bzw. ausgeschaltet werden.

Eine Sekundärwicklung 20 des Transformators E ist mit einem Kondensator 21 und mit einem Ausgang 32 für die Ausgangswechselspannung verbunden. Der Kondensator 21 dient dabei zur Dämpfung von durch die 20-kHz-Impulse bedingten Störungen. Die Ausgangswechselspannung wird über einen Hilfstransformator 28 auf eine Spannung von 12 V herabgesetzt und dient der Steuerschaltung als Versorgungsspannung (nach entsprechender Gleichrichtung) und als Istwert zur Regelung der Ausgangswechselspannung über die Impulsbreite der Steuersignale B und C.

Eine weitere Sekundärwicklung 19 des Transformators E ist mit einem Ladegleichrichter 29 verbunden, an welchen die Batterie 33 angeschlossen ist. Somit wird die Batterie 33 während des Betriebes der erfindungsgemäßen Einrichtung am Stromnetz auf- bzw. nachgeladen.

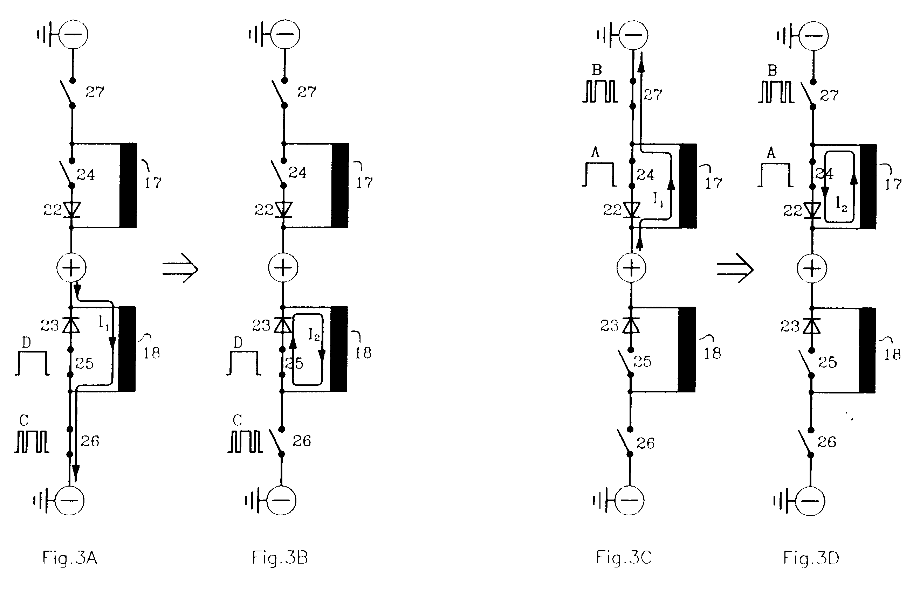

Im folgenden wird anhand der Figuren 3A bis 3D die Funktion der Gegentaktschaltungen 15 (Fig. 2) erläutert. Dazu sind die Transistoren 24 bis 27 als Schalter dargestellt. Die Figuren 3A bis 3D zeigen den Schaltzustand und den Stromfluß während vier verschiedenen Zeitpunkten innerhalb einer Periode der Ausgangswechselspannung - davon die Figuren 3A und 3B während einer ersten Halbwelle und die Figuren 3C und 3D während einer zweiten Halbwelle. Entsprechend ist während der ersten Halbwelle durch die Ansteuerung mit dem Steuersignal D der Schalter 25 geschlossen, während der Schalter 26 mit der Frequenz von 20 kHz geschlossen bzw. geöffnet wird. Die anderen Schalter 24, 27 sind während der gesamten ersten Halbwelle nichtleitend bzw. geöffnet.

Während der Schließzeit des Schalters 26 fließt vom Pluspol über die Teilwicklung 18 und den Schalter 26 zum Minuspol der Batterie ein Strom I₁, der wegen der induktiven Komponente der Teilwicklung 18 während der Schließzeit des Schalters 26 ansteigt. Nach jeweils einem Impuls des Steuersignals C wird der Schalter 26 wieder geöffnet (Fig. 3B). Die in der Induktivität gespeicherte Energie hat einen Stromfluß I₂ durch die Wicklung 18, den geschlossenen Schalter 25 und die Freilaufdiode 23 zur Folge, der bis zum nächsten Impuls des Steuersignals C allmählich abnimmt. Diese Vorgänge wiederholen sich bei allen Impulsen des Steuersignals C während der ersten Halbwelle der Ausgangswechselspannung.

Während der zweiten Halbwelle der Ausgangswechselspannung sind gemäß Fig. 3C und 3D die Schalter 25, 26 nichtleitend und der Schalter 24 durch Ansteuerung mit dem Signal A leitend. Der Schalter 27 wird pulsierend entsprechend dem Steuersignal B geschlossen. Es fließt abwechselnd ein Strom I₁ aus der Batterie über die Teilwicklung 17 und den Schalter 27 und ein Strom I₂ aus der Teilwicklung 17 durch die Freilaufdiode 22. Die mit Hilfe der Figuren 3A bis 3D beschriebenen Vorgänge zeigen deutlich, daß die Teilwicklungen 17, 18 im wesentlichen nur mit der Frequenz der Ausgangswechselspannung beaufschlagt werden, wodurch mit der Zahl der Flußrichtungswechsel Magnetisierungsverluste im Eisenkern des Transformators vermindert werden.

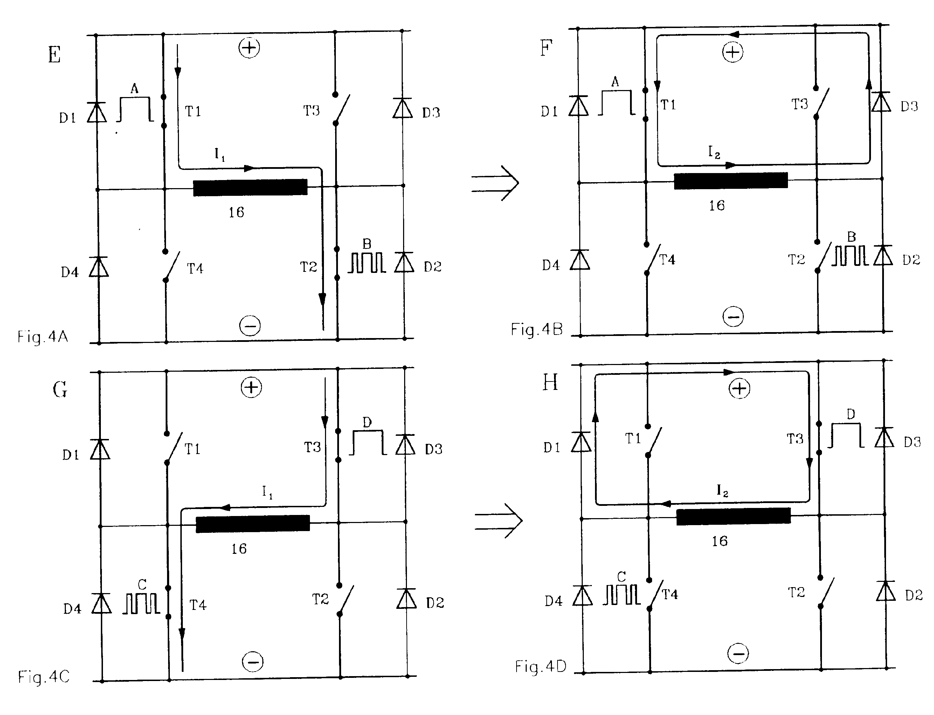

Fig. 4 stellt während vier Zeitpunkten den Zustand der Brückenschaltung 34 (Fig. 2) und den Stromfluß durch diese Schaltung dar. Dabei zeigen die Figuren 4A und 4B die Verhältnisse während einer ersten Halbwelle und die Figuren 4C und 4D die Verhältnisse während einer zweiten Halbwelle der Ausgangswechselspannung. Während der ersten Halbwelle ist der Schalter T1 leitend, während der Schalter T2 pulsierend betrieben wird. Ist auch dieser leitend (Fig. 4A), fließt ein Strom I₁ vom Pluspol der Spannungsquelle (Gleichrichter 2 und Ladekondensator 6, Fig. 2) über den Schalter T1, die Primärwicklung 16 und den Schalter T2 zum Minuspol. Am Ende eines jeden Impulses des Steuersignals B wird der Schalter T2 nichtleitend, worauf sich ein Stromfluß I₂ durch den Schalter T1, die Primärwicklung 16 und die Freilaufdiode D3 herausbildet. In der zweiten Halbwelle wiederholen sich die Vorgänge mit den Schaltern T3 und T4, wobei die Primärwicklung 16 in umgekehrter Richtung vom Strom I₁ bzw. I₂ durchflossen wird.

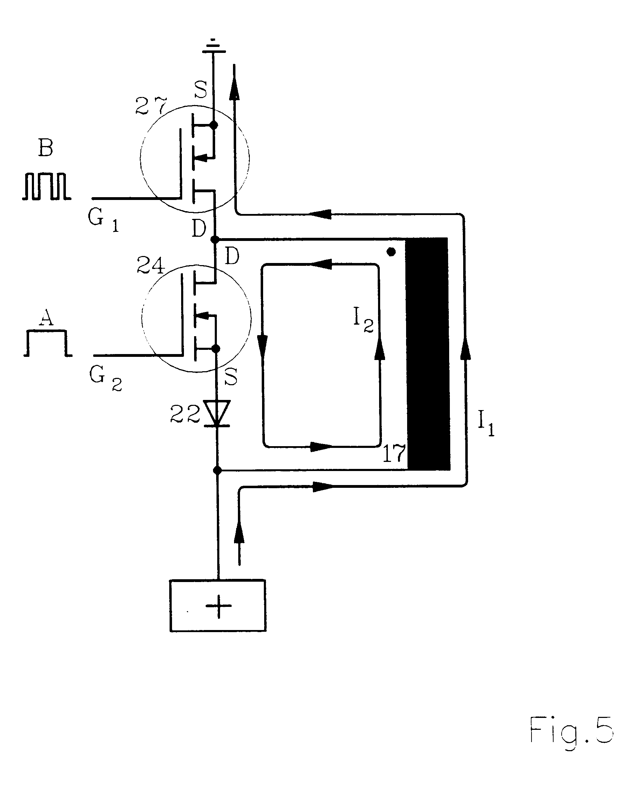

Fig. 5 stellt einen Zweig der Gegentaktschaltung 15 (Fig. 2) dar, in welchem nochmals die Ströme I₁ und I₂ durch Pfeile gekennzeichnet sind. Bezüglich Einzelheiten dieser Darstellung wird auf die Erläuterungen zu Fig. 3 hingewiesen.

## Patentansprüche

1. Einrichtung zur frequenz- und spannungsunabhängigen (on-line) unterbrechungsfreien Stromversorgung mit einer ersten Endstufe (W1) zur Umwandlung einer zugeführten Wechselspannung in eine pulsbreitenmodulierte Spannung oder eine analoge Wechselspannung und einer zweiten Endstufe (W₂) zur Umwandlung einer aus einer Batterie (33) entnommenen Gleichspannung in eine pulsbreitenmodulierte Spannung oder eine analog modulierte Spannung, wobei die Ausgänge der Endstufen (W₁, W₂) an je eine Primärwicklung (16, 17, 18) eines Transformators (E) angeschlossen sind, dessen Sekundärwicklung (20) eine Ausgangswechselspannung führt und wobei die erste und die zweite Endstufe (W1, W2) ansteuernde zueinander synchrone Impulse einer gemeinsamen Impulsquelle (5) entnehmbar sind, dadurch gekennzeichnet, daß die Zuführung der Impulse zur zweiten Endstufe (W2) mit Hilfe eines Schaltsignals erfolgt derart, daß bei Unterschreiten eines vorgegebenen Wertes der Eingangswechselspannung (E₁ E₂) die zweite Endstufe über eine elektronische Und-Gliedschaltung (F, 11, 12, 13, 14) aktivierbar ist

2. Einrichtung nach Anspruch 1, dadurch gekennzeichnet, daß die von dem ersten und von dem zweiten Wandler (W1, W2) erzeugten pulsbreitenmodulierten Spannungen aus Impulsen bestehen, deren Frequenz einem Vielfachen der Frequenz der Ausgangswechselspannung entspricht und deren Breite entsprechend der Frequenz und der Kurvenform der Ausgangswechselspannung moduliert ist, und daß die Impulse bezüglich ihrer Polarität der jeweils gebildeten Halbwelle der Ausgangswechselspannung entsprechen.

3. Einrichtung nach Anspruch 1, dadurch gekennzeichnet, daß der erste und der zweite Wandler (W1, W2) aus elektronischen Schaltern bestehende Gegentaktschaltungen (34; 15) enthalten, wobei jeweils abwechselnd einer der Schalter (T2, T4, 25, 27) mit pulsbreitenmodulierten Impulsen und der andere Schalter (T1, T3, 24, 26) mit Impulsen angesteuert wird, deren Dauer und zeitliche Lage einer Halbwelle der Ausgangswechselspannung entsprechen.

4. Einrichtung nach Anspruch 3, dadurch gekennzeichnet, daß die Gegentaktschaltung (34) aus zwei zueinander gegenläufig angesteuerten Brückenzweigen besteht und daß den elektronischen Schaltern Freilaufdioden parallelgeschaltet sind.

5. Einrichtung nach Anspruch 3, dadurch gekennzeichnet, daß für mindestens einen der Wandler zwei Gegentaktschaltungen (15) vorgesehen sind, die mit je einer Teilwicklung (17, 18) der Primärwicklung verbunden sind und daß in Reihe mit denjenigen Schaltern (24, 25), die mit Impulsen angesteuert werden, deren Dauer und zeitliche Lage einer Halbwelle der Ausgangswechselspannung entsprechen, je eine Diode (22, 23) geschaltet ist.

6. Einrichtung nach Anspruch 1, dadurch gekennzeichnet, daß der Transformator (E) eine weitere Sekundärwicklung (19) aufweist, die mit einem Ladegleichrichter (29) für die Batterie (33) verbunden ist.

7. Einrichtung nach Anspruch 1, gekennzeichnet durch eine Steuerschaltung (5), welcher ein die Höhe der Eingangswechselspannung kennzeichnendes Signal, ein die Höhe der Ausgangswechselspannung kennzeichnendes Signal, eine Wechselspannung mit der Frequenz der Ausgangswechselspannung und ein zu modulierendes Signal, dessen Frequenz einem Vielfachen der Frequenz der Ausgangswechselspannung entspricht, zuführbar sind und daß die Steuerschaltung pulsbreitenmodulierte Impulse und den Halbwellen der Ausgangswechselspannung entsprechende Impulse erzeugt.

## Claims

1. Device for the frequency- and voltage-independent (on-line) uninterrupted supply of power with a first end stage (W₁) for the conversion of supplied alternating voltage into a pulse with modulated voltage or an analogous alternating voltage and a second end stage (W₂) for the conversion of a direct current taken from a battery (33) into a pulse width modulated voltage or an analogously modulated voltage, whereby the outputs of the end stages (W₁, W₂) are each connected to a primary winding (16, 17, 18) of a transformer (E), the secondary winding (20) of which conducts an output alternating voltage and whereby the first and the second end stage (W₁, W₂), directed to one another, can be synchronous impulses taken from a common impulse source (5), characterised in that the supply of the impulses to the second end stage (W₂) takes place with the help of a switch signal in such a manner that, in the case of undershooting a preset value of the input alternating voltage (E₁, E₂), the second end stage can be activated via an electronic AND gate (F, 11, 12, 13, 14).

2. Device according to claim 1, characterised in that the pulse width modulated voltages produced by the first and by the second transformer (W₁, W₂) consist of impulses, the frequency of which corresponds to a multiple of the frequency of the output alternating voltage and the width of which is modulated corresponding to the frequency and to the curve shape of the output alternating voltage and that the impulses correspond, with regard to their polarity, to the half wave of the output alternating voltage formed in each case.

3. Device according to claim 1, characterised in that the first and the second transformers (W₁, W₂) contain push-pull circuits (34; 15) consisting of electronic circuits, whereby, in each case alternatingly, one of the circuits (T2, T4, 25, 27) is controlled with pulse width modulated impulses and the other circuit (T1, T3, 24, 26) with impulses, the duration and chronological position of which corresponds to a half wave of the output alternating voltage.

4. Device according to claim 3, characterised in that the push-pull circuit (34) consists of two bridge arms controlled counter to one another and that recovery diodes are connected in parallel to the electronic circuits.

5. Device according to claim 3, characterised in that, for at least one of the transformers, two push-pull circuits are provided, each of which is connected with a part winding of the primary coil and that, in series with those circuits (24, 25) which are controlled with impulses, the duration and chronological position of which correspond to a half wave of the output alternating voltage, is in each case connected with a diode (22, 23).

6. Device according to claim 1, characterised in that the transformer (E) has a further secondary winding (19) which is connected with a charging rectifier (29) for the battery (33).

7. Device according to claim 1, characterised by a control switch (5) to which can be supplied a signal characterising the magnitude of the input alternating voltage, a signal characterising the magnitude of the output alternating voltage, an alternating voltage with the frequency of the output alternating voltage and a signal to be modulated, the frequency of which corresponds to a multiple of the frequency of the output alternating voltage, and that the control switch produces pulse width modulated impulses and impulses corresponding to the half waves of the output alternating voltage.

## Revendications

1. Dispositif d'alimentation en courant sans coupure et indépendamment de la fréquence et de la tension (en ligne), comprenant un premier étage final (W1) pour convertir une tension alternative appliquée en une tension modulée en largeurs d'impulsions ou bien en une tension alternative analogique, et un second étage final (W2) pour convertir une tension continue, provenant d'une batterie (33), en une tension modulée en largeurs d'impulsions ou en une tension modulée analogique, les sorties des étages finaux (W1, W2) étant reliées chacune à un enroulement primaire (16, 17, 18) d'un transformateur (E) dont l'enroulement secondaire (20) fournit à sa sortie une tension alternative, des impulsions mutuellement synchrones, commandant le premier et le second étage final (W1, W2), pouvant être produites par une source d'impulsions commune (5), caractérisé en ce que l'application des impulsions au second étage final (W2) est commandée au moyen d'un signal de commutation de telle sorte que, lorsque la tension alternative d'entrée (E1, E2) diminue en dessous d'une valeur prédéterminée, le second étage final puisse être activé par l'intermédiaire d'un circuit électronique à porte-ET (F, 11, 12, 13, 14).

2. Dispositif selon la revendication 1, caractérisé en ce que les tensions modulées en largeurs d'impulsions, produites par le premier et le second convertisseur (W1, W2) se composent d'impulsions dont la fréquence correspond à un multiple de la fréquence de la tension alternative de sortie et dont la largeur est modulée en correspondance à la fréquence et à la forme de courbe de la tension alternative de sortie et en ce que la polarité des impulsions est en relation avec la demi-onde correspondante de la tension alternative de sortie.

3. Dispositif selon la revendication 1, caractérisé en ce que le premier et le second convertisseur (W1, W2) comportent des circuits push-pull (34, 15) se composant de commutateurs électroniques et à cet égard il se produit en alternance une activation d'un des commutateurs (T2, T4, 25, 27) par des impulsions modulées en largeurs d'impulsions et une activation d'un des autres commutateurs (T1, T3, 24, 26) par des impulsions dont la durée et la position temporelle correspondent à une demi-onde de la tension alternative de sortie.

4. Dispositif selon la revendication 3, caractérisé en ce que le circuit push-pull (34) se compose de deux branches de pont commandées de façon inverse l'une de l'autre et en ce que des diodes arbitraires sont disposées en parallèle aux commutateurs électroniques.

5. Dispositif selon la revendication 3, caractérisé en ce que, pour au moins un des convertisseurs, il est prévu deux circuits push-pull (15) qui sont reliés respectivement à une partie correspondante (17, 18) de l'enroulement primaire et en ce qu'il est prévu, en série avec les commutateurs (24, 25), qui sont commandés par des impulsions dont la durée et la position temporelle correspondent à une demi-onde de la tension alternative de sortie, une diode correspondante (22, 23).

6. Dispositif selon la revendication 1, caractérisé en ce que le transformateur (E) comporte un autre enroulement secondaire (19) qui est relié à un redresseur de charge (29) de la batterie (33).

7. Dispositif selon la revendication 1, caractérisé par un circuit de commande (5), qui peut recevoir un signal caractérisant la grandeur de la tension alternative d'entrée, un signal caractérisant la grandeur de la tension alternative de sortie, une tension alternative ayant la fréquence de la tension alternative de sortie et un signal à moduler, dont la fréquence correspond à un multiple de la fréquence de la tension alternative de sortie, et en ce que le circuit de commande produit des impulsions modulées en largeurs d'impulsions et des impulsions correspondant aux demi-ondes de la tension alternative de sortie.
